# EUROPEAN PATENT APPLICATION

(11) **EP 4 785 772 A1**
(43) Date of publication of application: **05.08.2026**
(21) Application number: 25216351.4
(22) Date of filing: 17.11.2025
(51) Int. Cl.: A01D 34/00

(54) **MOWING VEHICLE AND COMPUTERIMPLMENTED METHOD OF CONTROLLING SUCH**

(30) Priority: 31.01.2025 US 202519042784
(71) Applicant: Deere & Company, Moline, IL 61265 (US)
(72) Inventor: Carnahan, Bryce, Mannheim (DE); Berry, Justin, Mannheim (DE); Anderson, David, Mannheim (DE)
(74) Representative: Reichert, Christian

(57) **Abstract**

A mowing vehicle (100) is disclosed. The mowing vehicle (100), comprising: a propulsion subsystem (112); a steering subsystem (114); a cutting head (104, 106); and a mowing vehicle control system (105) configured to dynamically identify (288) an actuation point for issuing a cutting head position command, to change (320, 336) a position of the cutting head (104, 106) from a first position to a second position, based on a current ground speed (328) of the mowing vehicle (100) and based on a location where the cutting head (104, 106) is to be in the second position. Furthermore a computer implemented method of controlling such a mowing vehicle (100) is disclosed.

## Description

### FIELD OF THE DESCRIPTION

The present description relates to mowing vehicles. More specifically, the present description relates to speed-based commands to control implements on a mowing vehicle.

### BACKGROUND

There are a wide variety of different types of grass mowing vehicles used to mow golf courses, parks, athletic fields, and lawns. Grass mowing vehicles can include functionality for automatically controlling travel path and other operating settings of the grass mowing vehicles during a mowing operation. A path planner can be used to generate a path plan for a grass mowing vehicle that can include a route, including swaths (cutting passes) connected by turns, as well as other prescriptive operating settings along the route.

The discussion above is merely provided for general background information and is not intended to be used as an aid in determining the scope of the claimed subject matter.

### SUMMARY

A speed-based raise/lower control system receives a path plan for use in navigating a grass mowing vehicle. A lookahead processor looks ahead by a lookahead distance to determine whether an implement control event (such as a raise event or a lower event) is to occur within the lookahead distance. A dynamic actuation point identifier calculates a location of an actuation point, where a command is to be issued to commence the implement control event, based upon a current speed of the mowing vehicle. The dynamic actuation point identifier continues to update the location of the actuation point based upon a current speed of the mowing vehicle until a location of the mowing vehicle is within a threshold distance of the location of the actuation point. An actuation control signal generator generates the actuation control command signal to commence the implement control event when the current position of the mowing vehicle is within the threshold distance of the location of the actuation point.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter. The claimed subject matter is not limited to implementations that solve any or all disadvantages noted in the background.

### BRIEF DESCRIPTION OF THE DRAWINGS

FIG. 1 is a partial pictorial, partial schematic diagram of a grass mowing vehicle.
FIG. 2 is a pictorial illustration showing passes and turns defining a path or route for a grass mowing vehicle.
FIG. 3 is a pictorial illustration identifying different locations corresponding to a raise implement control event and a lower implement control event.
FIG. 4 is a block diagram showing one example of a mowing vehicle control system in more detail.
FIGs. 5A and 5B (collectively referred to herein as FIG. 5) show a flow diagram illustrating one example of the operation of the mowing vehicle control system in controlling execution of implement control events.
FIG. 6 is a block diagram showing one example of a grass mowing vehicle deployed in a remote server architecture.
FIGs. 7, 8, and 9 show examples of mobile devices that can be used in architectures and systems shown in other FIGs.
FIG. 10 is a block diagram showing one example of a computing environment that can be used in architectures and systems shown in other FIGs.

### DETAILED DESCRIPTION

For the purposes of promoting an understanding of the principles of the present disclosure, reference will now be made to the examples illustrated in the drawings, and specific language will be used to describe the same. It will nevertheless be understood that no limitation of the scope of the disclosure is intended. Any alterations and further modifications to the described devices, systems, methods, and any further application of the principles of the present disclosure are fully contemplated as would normally occur to one skilled in the art to which the disclosure relates. In particular, it is fully contemplated that the features, components, and/or steps described with respect to one example may be combined with the features, components, and/or steps described with respect to other examples of the present disclosure.

As discussed above, it is not uncommon for a mowing vehicle to mow an area of interest (e.g., the area to be mowed) according to a path plan that is generated by a path planning system. The path planning system generates swaths (or cutting passes) and connects those swaths or cutting passes with turns to generate the path plan. One example of a site where a mowing vehicle is used to mow grass is a fairway on a golf course. The mowing vehicle often cuts the swaths or passes, traversing the fairway, and navigates the turns outside the boundary of the fairway.

When completing a swath, and approaching the boundary of the fairway, the mowing vehicle must raise the cutting heads before exiting the fairway so as not to scalp the rough area of the golf course, that lies outside the boundary of the fairway. When completing a turn and re-entering the fairway, the mowing vehicle must wait to lower the cutting heads until after leaving the rough area, so as not to scalp the rough area of the golf course but must lower the cutting heads in sufficient time to mow the fairway. Generating a control signal to raise the cutting heads is one example of an implement control command. Generating a control signal to lower the cutting heads is another example of an implement control command.

There is a mechanical delay between when a command is issued (e.g., when a control signal is generated) to raise a cutting head and when the cutting head comes out of engagement with the grass and reaches its fully raised position. There is also mechanical delay between when a command is issued (e.g., when a control signal is generated) to lower the cutting head and when the cutting head comes into engagement with the grass and reaches its fully lowered position. The mechanical delays for raising the cutting head and lowering the cutting head may be different from one another.

For instance, to raise a cutting head, a command may be issued to actuate an electrical relay which energizes a raise actuator that is used to raise the cutting head. Because the actuator must overcome the weight of the cutting head, the mechanical delay may be relatively long. The latency corresponding to the relay actuation and the actuator movement contribute to the mechanical delay. Similarly, to lower a cutting head, a command may be issued to de-actuate the electrical relay and de-energize the raise actuator and/or to actuate another electrical relay to energize a lower actuator that is used to lower the cutting head. Because the weight of the cutting head is assisting in lowering the cutting head, the mechanical delay may be relatively short.

To accommodate the mechanical delays in raising and lowering the cutting heads, some current systems set a command initiation offset distance. The system may identify a point where the cutting head needs to be in the raised position, for example. As the grass mowing vehicle approaches the point where the cutting head needs to be raised, for instance, the command initiation offset distance attempts to define the location where the command to raise the cutting head needs to be issued so that the cutting head is out of engagement with the grass (or is fully raised) by the time the mowing vehicle reaches the point where the cutting head needs to be raised. Similarly, as the grass mowing vehicle approaches a point where the cutting head needs to be lowered, the command initiation offset distance attempts to define the location where the command to lower the cutting head needs to be issued so that the cutting head comes into engagement with the grass (or is fully lowered) by the time the mowing vehicle reaches the point where the cutting head needs to be lowered.

This can present significant problems. For instance, there are scenarios where the mowing vehicle changes speed as it approaches the point where the cutting head is to be raised or lowered. By way of example, as the mowing vehicle is completing a pass across the fairway and approaches the boundary of the fairway, the mowing vehicle may also be approaching a bunker or another obstacle near the edge of the fairway. In that case, the mowing vehicle may reduce speed prior to reaching the obstacle, and thus prior to reaching the edge of the fairway. Using a fixed command initiation offset distance would thus result in the mowing vehicle raising the cutting head too early, before the mowing vehicle reaches the boundary of the fairway. Similarly, there may be scenarios where the mowing vehicle accelerates as it reaches the boundary of the fairway. For instance, it may be more efficient in terms of time or fuel, or more desirable in terms of avoiding damage to the turf, to have the mowing vehicle execute turns (when the cutting heads are out of engagement with the grass) at a lower rate of speed than when the cutting heads are in engagement with the grass. Therefore, as the mowing vehicle is completing a turn and approaching the boundary of a fairway, the mowing vehicle may accelerate into the next swath or pass. Using a fixed command initiation offset distance thus results in the mowing vehicle lowering the cutting head too late, after the mowing vehicle crosses the boundary of the fairway, resulting in unmowed areas. These are just some examples where using a fixed command initiation offset distance creates undesirable results and can damage the area being mowed.

Thus, the present description describes a speed-based implement control system. The control system looks ahead along the route of the mowing vehicle to determine whether an implement control event (such as a raise event or a lower event) is ahead of the mowing vehicle (e.g., is to occur within a lookahead window). Such a point may be identified in the path plan generated by the path planner or generated by a separate system that analyzes the mowed and non-mowed areas along the route of the mower defined by the path plan or obtained in other ways. If so, a dynamic actuation point identifier accesses the raise delay time or lower delay time for the mowing vehicle and detects the current speed of the mowing vehicle and calculates a command initiation location (also referred to as an actuation point). The command initiation location identifies a location along the route of the mowing vehicle where the raise or lower command is to be issued and applied to the raise or lower actuator, based upon the current speed of the mowing vehicle and based upon the raise or lower delays, so the raise or lower event can be executed at the proper time, so it can be completed without damaging the area being mowed. The dynamic actuation point identifier continues to monitor the current speed of the mowing vehicle and to recompute the command initiation location (or actuation point) where the raise or lower command is to be issued until the mowing vehicle is within a threshold distance of the currently computed command initiation location, at which point the control system issues the raise or lower command. Thus, the present system accounts for changes in speed of the mowing vehicle all the way up until the raise or lower command is issued. This greatly enhances the accuracy of the control system.

Further, in one example, the raise and/or lower times are configurable or programmable. Therefore, even after issuing the raise or lower command, the control system continues to monitor the speed of the mowing vehicle. The control system can increase or decrease the rate at which the cutting head is raised or lowered based upon accelerations or decelerations of the mowing vehicle while the cutting head is being raised or lowered. Such a system accounts for changes in speed of the mowing vehicle that occur even after the raise or lower command is issued.

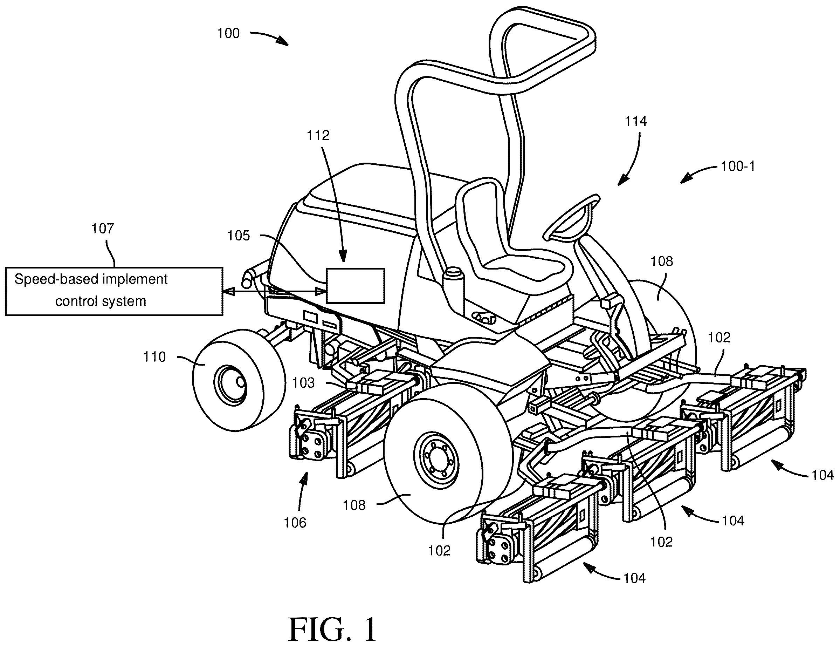

FIG. 1 is partial pictorial, partial schematic illustration of one example of a grass mowing vehicle 100. In the example shown in FIG. 1, grass mowing vehicle 100 is a fairway mowing vehicle 100-1. Fairway mowing vehicle 100-1 includes a plurality of front cutting units 104 and one or more rear cutting units 106. The position of front cutting units (or cutting heads) 104 and rear cutting units (or cutting heads) 106 may be controllably set and adjusted by virtue of one or more movable support apparatuses, illustratively shown as 102 and 103. Thus, movable support apparatuses 102 and 103 may include raise/lower actuator assemblies that are used to raise the cutting units 104 and 106 out of engagement with the grass and to lower cutting units 104 and 106 into engagement with the grass in a selectively controllable manner. In one example, each of the different cutting units 104, 106 has a corresponding, independently controllable actuator assembly that can be controlled to raise and/or lower the corresponding cutting unit 104, 106 independently of the other cutting units 104, 106. Therefore, for instance, each of the front cutting units 104 may be independently raised and lowered relative to one another and relative to the rear cutting units 106. Similarly, each of the rear cutting units 106, may be independently raised and lowered relative to one another and relative to the front cutting units 104. Fairway mowing vehicle 100-1 further includes left and right drive wheels 108 and one or more steerable left and right rear wheels 110. Fairway mowing vehicle 100-1 includes a number of controllable subsystems, some of which are shown in FIG. 1. As illustrated, fairway mowing vehicle 100-1 includes a propulsion subsystem, indicated generally by arrow 112, and a steering subsystem, indicated generally by arrow 114.

Propulsion subsystem 112 includes a powerplant (e.g., internal combustion engine, batteries, hybrid (combustion engine and batteries), etc.) as well as other drivetrain elements (e.g., gearbox, axles, brakes, actuators such as electric motors, etc.). In one particular example, propulsion subsystem 112 includes an electric motor corresponding to each of left and right drive wheels 108, wherein the corresponding motor is used to drive the left and right drive wheels 108. The electric motors are powered by on-board batteries which can be charged by an internal combustion engine or by another source.

Steering subsystem 114 includes one or more actuators (e.g., linear actuators, hydraulic actuators, etc.) and linkages used to change orientation (e.g., turn angle) of steerable left and right rear wheels 110 to change a heading of fairway mowing vehicle 100-1.

As illustrated in FIG. 1, fairway mowing vehicle 100-1 includes a mowing vehicle control system 105, one example of which is described in greater detail with respect to other FIGs. In one example, mowing vehicle control system 105 can include controller(s), sensors, computing device(s), etc. Mowing vehicle control system 105 is operable to send control signals to control controllable subsystems, including propulsion subsystem 112 and steering subsystem 114, to set and adjust operating parameters of fairway mowing vehicle 100-1, such as travel direction (or heading) and travel speed, raising and lowering the cutting units 104, 106 either as a group or in subsets or individually, and/or other operating parameters of fairway mowing vehicle 100-1. As will be discussed in more detail with respect to other FIGs., control system 105 can include, or be implemented by, memory storing instructions and one or more processors that execute the instructions. Further, control system 105 can include other items, such as a speed-based implement control system 107, as will be shown in greater detail elsewhere herein.

While not shown in FIG. 1, fairway mowing vehicle 100-1 can include several different sensors that can provide sensor data (e.g., sensor signals, images, etc.) that can be used by control system 105 to control fairway mowing vehicle 100-1. Some examples of such sensors are described below.

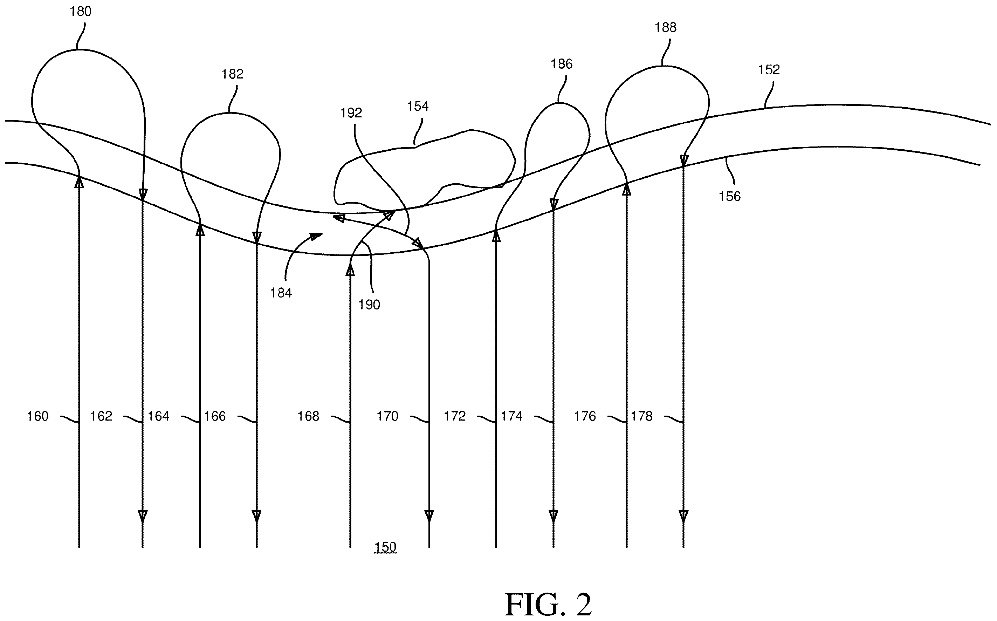

FIG. 2 is a pictorial illustration showing a route for a fairway mowing vehicle 100-1 that can be followed to mow a fairway 150. In the example shown in FIG. 2, fairway 150 has boundary 152 that divides the fairway from the rough. Also, a hazard, such as a bunker or sand trap 154 is shown adjacent to a portion of boundary 152 of fairway 150. FIG. 2 shows that the route followed by fairway mowing vehicle 100-1 is defined by a plurality of swaths or passes labeled 160-178 which traverse the fairway 150. Adjacent swaths or passes 160-178 traverse fairway 150 in opposite directions. Also, adjacent swaths 160-178 are connected by turns. During the turns, the cutting heads 104, 106 are desirably raised out of engagement with the grass to avoid scalping the rough area outside the fairway 150.

In the example shown in FIG. 2, only the turns on one side of fairway 150 (proximate boundary 152) are illustrated. It will be appreciated that turns are also executed to connect the swaths or passes 160-178 on the opposite side of the fairway that is not shown in FIG. 2. Thus, FIG. 2 shows that turns 180-188 connect adjacent swaths or passes 160-178. For instance, a path planning system that plans the path shown in FIG. 2 may identify swaths or passes 176 and 178 and connect those swaths or passes with a turn 188. Similarly, the path planning system may connect the opposite side of swath 176 (not shown in FIG. 2) with the opposite side of swath 174 (also not shown in FIG. 2) and may connect swaths 174 and 172 with turn 186. Further, FIG. 2 shows that swaths 168 and 170 are connected by turn 184, swaths 164 and 166 are connected by turn 182, and swaths 160 and 162 are connected by turn 180.

In one example, it may be desirable to have fairway mowing vehicle 100-1 execute turns at a lower velocity (while cutting heads 104, 106 are out of engagement with the grass) than when fairway mowing vehicle 100-1 is executing swaths 160-178 (when the cutting heads 104, 106 are in engagement with the grass). Therefore, as fairway mowing vehicle 100-1 approaches the end of swath 160 and approaches turn 180, fairway mowing vehicle 100-1 may decelerate. The same may be true as fairway mowing vehicle 100-1 approaches the end of swath 164 and the beginning of turn 182, approaches the end of swath 172 and the beginning of turn 186, and approaches the end of swath 176 and the beginning of turn 188. Similarly, as fairway mowing vehicle 100-1 approaches the end of turns 180, 182, 186 and 188, fairway mowing vehicle 100-1 may accelerate to a desired mowing speed. With a fixed or static command initiation offset distance discussed above (e.g., a command initiation offset distance that does not consider the instantaneous speed of the fairway mowing vehicle 100-1 during the cutting operation), these accelerations and decelerations can result in fairway mowing vehicle 100-1 raising and lowering the cutting heads 104, 106 too early or too late.

FIG. 2 also shows that the route for fairway mowing vehicle 100-1 includes a cleanup lap identified by line 156. Cleanup lap 156 is executed around the periphery of fairway 150 and interior of boundary 152, after the swaths 160-178 are mowed. Cleanup lap 156 generally covers uncut areas of grass closely adjacent boundary 152, which may not be cut due to mechanical delays in raising and lowering the cutting units 104 and 106, or for other reasons. FIG. 2 also shows that, near bunker 154, fairway mowing vehicle 100-1 cannot perform a wide turn like turns 180, 182, 186, and 188 that are outside boundary 152 of fairway 150. Instead, (e.g., referring to swath 168) as fairway mowing vehicle 100-1 approaches the end of swath 168, fairway mowing vehicle 100-1 decelerates to begin to make a 3-point turn along arc 190. Fairway mowing vehicle 100-1 then executes a three point turn 184 and approaches the next subsequent swath or pass 170 along arc 192 where fairway mowing vehicle 100-1 again accelerates. Again, with a fixed command initiation offset distance, these accelerations and decelerations can result in fairway mowing vehicle 100-1 raising and lowering the cutting heads 104, 106 too early or too late.

Therefore, in one example, vehicle control system 105 includes a speed-based implement control system 107 which automatically and dynamically calculates the command initiation location (or actuation point) based upon the delay times in raising and/or lowering cutting heads 104, 106 and based on a current ground speed of fairway mowing vehicle 100-1. As discussed above, the delay times can be fixed or configurable by controlling the rate at which the cutting head is raised or lowered. Automatically updating the actuation point accommodates for any accelerations or decelerations that occur as fairway mowing vehicle 100-1 approaches the end of a swath or the beginning of a swath, as fairway mowing vehicle 100-1 approaches obstacles, or as fairway mowing vehicle 100-1 accelerates or decelerates for other reasons. Further, where the raise and/or lower times are configurable, control system 107 can continue to monitor the speed of mowing vehicle 100-1 even while the cutting heads 104, 106 are being raised or lowered. The rate at which the cutting heads 104, 106 are raised or lowered can be changed based on changes in the speed of mowing vehicle 100-1. Again, this automatically accommodates accelerations or decelerations by mowing vehicle 100-1, even after the raise or lower command is issued. By automatically it is meant, in one example, that the process, method, or action is performed without further human involvement except, perhaps to initiate or authorize the process method, or action.

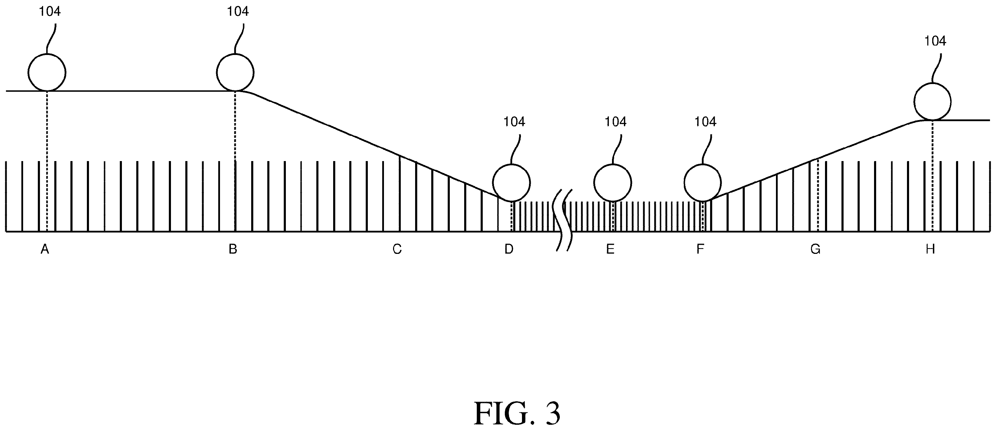

FIG. 3 is a pictorial illustration showing the location of a cutting head 104 at different locations along the route of fairway mowing vehicle 100-1. At location A, cutting head 104 is in a raised position. At location B, a lower command is issued to lower cutting head 104 from the raised position to the lowered position. Point B is thus referred to as the actuation point or command initiation location. Between positions B and D, the cutting head 104 moves from the fully raised position shown at location B to the fully lowered position shown at location D. At location C, cutting head 104 has lowered sufficiently that it begins engaging the grass. Location E shows cutting head 104 also in the fully lowered position. At location F, a raise command is issued to raise cutting head 104 from the lowered position to the raised position. Point F is also referred to as an actuation point or a command initiation location. Between locations F and H, cutting head 104 is raised from the fully lowered position shown at point F to the fully raised position shown at point H. At location G, cutting head 104 has been raised sufficiently that it comes out of engagement with the grass.

In one example, speed-based implement control system 107 begins at some point (e.g., at location A) looking ahead along the route of fairway mowing vehicle 100-1 to identify the location D where the cutting head 104 needs to be in the lowered position. Location D may be incorporated into a path plan generated by a path planner or identified by an on-board system or by another system. The speed-based implement control system 107 then detects the current speed of fairway mowing vehicle 100-1 and accesses the time delay associated with lowering cutting head 104 and computes the location B as the command initiation location or actuation point where the lower command is to be issued so that cutting head 104 can be in the lowered position by the time it reaches location D. Until the fairway mowing vehicle 100-1 is within a threshold distance of command initiation location B, speed-based implement control system 107 continues to monitor the ground speed of fairway mowing vehicle 100-1 and continues to revise or update the command initiation location (the location of point B along the mowing vehicle route) based upon the current ground speed of fairway mowing vehicle 100-1. Once the mowing vehicle 100-1 is within a threshold distance of location B, then speed-based implement control system 107 issues the lower command so that cutting head 104 is moved into the lowered position by the time the cutting head 104 reaches location D.

Where the rate at which cutting head 104 is lowered is programmable or configurable, then system 107 can continue to monitor the speed of mowing vehicle 100-1 even after the lower command is issued at point B. System 107 can change the rate at which cutting head 104 is lowered based on changes in the speed of mowing vehicle 100-1 to ensure that the cutting head 104 is in the lowered position at the time it reaches location D.

Similarly, when cutting head 104 is in location E (or at some other location), speed-based implement control system 107 looks ahead along the route of fairway mowing vehicle 100-1 to identify location H. Location H identifies a location where cutting head 104 needs to be in the raised position. Then, speed-based implement control system 107 again detects the ground speed of fairway mowing vehicle 100-1, as well as the mechanical delay in raising cutting head 104 from the lowered position to the raised position, and computes the command initiation location F which identifies the location along the route of mowing vehicle 100-1 where the raise command needs to be issued so that cutting head 104 has time to move from the lowered position to the raised position by the time it reaches location H. Again, until the fairway mowing vehicle 100-1 is within a threshold distance of command initiation location F, speed-based implement control system 107 continues to evaluate command initiation location F, and update that location, based upon the current speed of fairway mowing vehicle 100-1.

Similarly, where the rate at which cutting head 104 is raised is programmable or configurable, system 107 can change that rate based upon vehicle speed changes that occur after location F.

Thus, even if fairway mowing vehicle 100-1 accelerates or decelerates before reaching location B (or, where the rate at which cutting head 104 is lowered is configurable, then before reaching location D), speed-based implement control system 107 will accommodate those accelerations or decelerations and continue to evaluate and modify the position of command initiation location B along the mowing route (and/or the rate at which cutting head 104 is lowered) so the lower control command can be issued in sufficient time (and/or the lower rate is sufficient) that cutting head 104 can move from the raised position to the lowered position by the time it reaches location D. Similarly, even if fairway mowing vehicle 100-1 accelerates or decelerates before reaching location F (or, where the rate at which cutting head 104 is raised is configurable or programmable, then before reaching location H), speed-based implement control system 107 will continue to evaluate and modify the geographic position of command initiation location F along the cutting route (and/or the rate at which cutting head 104 is raised) based upon those accelerations or decelerations so that the raise control command can be issued in sufficient time (and/or the raise rate can be sufficient) that cutting head 104 can move from the lowered position to the raised position by the time it reaches location H.

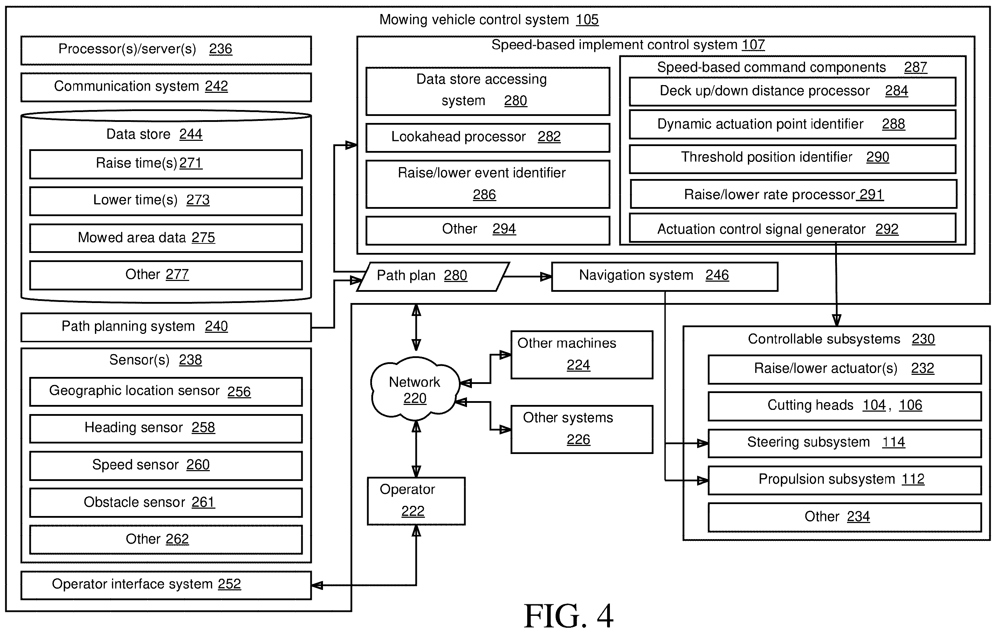

FIG. 4 shows one example of a block diagram illustrating mowing vehicle control system 105 in more detail. FIG. 4 shows that control system 105 can interact with operator 222. Interfaces may be generated on a mobile device used by operator 222 or in other ways. FIG. 4 also shows that mowing vehicle control system 105 can communicate with other machines 224 and/or other systems 226 over network 228. Other machines 224 can be other mowing vehicles, tender vehicles, or other machines. Other systems 226 can be manager computing systems, systems deployed in a remote server architecture (such as in the cloud) or other systems. Therefore, network 228 can be a wide area network, a local area network, near field communication network, a Wi-Fi or Bluetooth network, a cellular communication network, and/or any of a wide variety of other networks or combinations of networks.

FIG. 4 also shows that vehicle control system 105 can automatically control one or more controllable subsystems 230. Controllable subsystems 230 can include propulsion subsystem 112, steering subsystem 114, cutting heads 104, 106, a set of raise and lower actuators 232 (which may hydraulic cylinders, pneumatic cylinders, electric cylinders, etc, that are part of movable support apparatuses 102, 103), and any of wide variety of other controllable subsystems 234.

In the example shown in FIG. 4, mowing vehicle control system 105 includes one or more processors or servers 236, sensors 238, path planning system 240, communication system 242, data store 244, navigation system 246, speed-based implement control system 107, operator interface system 252, and other mower control functionality 254. Sensors 238 can include geographic position sensor(s) 256, heading sensor(s) 258, speed sensor(s) 260, obstacle sensor(s) 261, and any of wide variety of other sensors 262. Data store 244 can include raise time data 271, lower time data 273, mowed area data 275, as well as other data 277. Raise time data 271 may define the raise latency indicative of how long it takes to raise the cutting heads 104, 106 once a raise command is issued, as well as any of wide variety of other mower data. Lower time data 273 may define the lower latency indicative of how long it takes to lower the cutting heads 104, 106 once a lower command is issued, as well as any of wide variety of other mower data. Mowed area data 275 may include boundary data that geographically identifies (either in absolute coordinates or relative to the route of mowing vehicle 100-1 or in other ways) the boundaries of the fairway 150 being mowed, obstacle data that geographically identifies the location of obstacles such as bunker 154 and/or other obstacles (either in absolute coordinates or relative to the route of mowing vehicle 100-1 or in other ways), and the location and size of other items in the mowed area. The mowed area data 273 may be provided in the form of a map or according to other data structures. It will be appreciated that each of the individual cutting heads 104, 106 may be independently controllable. Therefore, the raise times 271 may include a separate raise time for each front cutting head 104 and a separate raise time for each rear cutting head 106. Similarly, lower times 273 can include separate lower times for each front cutting head 104 and for each rear cutting head 106.

Speed-based implement control system 107 can include data store accessing system 280, lookahead processor 282, raise/lower event identifier 286, and a set of speed-based command components 287, which includes deck up/down distance processor 284, dynamic actuation point identifier 288, threshold position identifier 290, raise/lower rate processor 291, actuation control signal generator 292, and other items 294. Before describing the overall operation of mowing vehicle control system 105 in automatically identifying and executing implement control commands, a description of some of the items in mowing vehicle control system 105, and their operation, will first be provided.

Communication system 242 facilitates the communication of items on mowing vehicle 100-1 with one another and/or over network 228. Therefore, communication system 242 can be a controller area network-CAN-bus and bus controller, a local area network or wide area network communication system, a Wi-Fi, Bluetooth, near field or other communication system, a cellular communication system, or any of wide variety of other communication systems or combinations of systems.

Geographic position sensor(s) 256 illustratively sense or detect the geographic position or location of a grass moving vehicle 100-1. Geographic position sensor(s) 256 can include, but are not limited to, a global navigation satellite system (GNSS) receiver that receives signals from a GNSS satellite transmitter. Geographic position sensor(s) 256 can also include a real-time kinematic (RTK) component that is configured to enhance the precision of position data derived from the GNSS signal. Geographic position sensor(s) 256 can include one or more RADAR sensors, LIDAR sensor, ultrasonic sensors, or cameras that generate sensor data for use in Simultaneous Localization and Mapping (SLAM) to identify the position or location of a grass mowing vehicle 100. Geographic position sensor(s) 256 can include a dead reckoning system, a cellular triangulation system, or any of a variety of other geographic position sensors.

Heading sensor(s) 258 detect a heading characteristic (e.g., travel direction) of a grass mowing vehicle 100-1. Heading sensor(s) 258 can include sensors that sense the movement or orientation (e.g., turn angle) of ground-engaging traction elements (e.g., wheels 110) or movement of components coupled to the ground engaging traction elements (e.g., steering shaft) or other elements, or can utilize signals received from other sources, such as geographic position sensor(s) 256. Thus, while heading sensor(s) 258 as described herein are shown as separate from geographic position sensor(s) 256, in some examples, vehicle heading is derived from signals received from geographic position sensor(s) 256 and subsequent processing. In other examples, heading sensors 258 are separate sensors and do not utilize signals received from other sources.

Speed sensor(s) 260 detect one or more speed characteristics (e.g., travel speed, acceleration, deceleration, etc.) of a grass mowing vehicle 100-1. Speed sensor(s) 260 can include sensors that sense the movement (e.g., rotation) of ground-engaging elements (e.g., wheels 108 or wheels 110) or movement of components coupled to the ground engaging elements (e.g., drive shafts, axles), or other elements. Speed sensor(s) 260 can include sensors, such as LIDAR or RADAR. In some examples, signals received from other sources, such as geographic position sensor(s) 256, can be utilized to detect speed characteristics. Thus, while speed sensor(s) 260 as described herein are shown as separate from geographic position sensor(s) 256, in some examples, vehicle speed is derived from signals received from geographic position sensor(s) 256 and subsequent processing. In other examples, speed sensor(s) 260 are separate sensors and do not utilize signals received from other sources.

Obstacle sensor 261 can include perception sensors (such as image sensors - e.g., cameras - and image processing systems, RADAR sensors, LIDAR sensors, infrared sensors, ultrasonic sensors, ultralow band sensors, etc.), mechanical sensors, and/or any of wide variety of other sensors that sense the location of obstacles either in a global or local coordinate system or relative to mowing vehicle 100-1, or otherwise.

Path planning system 240 can be any of wide variety of different path planning systems. Such systems can include graph-based methods (such as A* and Dijkstra algorithms), sampling-based methods (such as rapidly exploring random tree-RRT-algorithms), gradient-based systems (such as artificial potential field systems), optimization-based systems (such as using model predictive control), deep supervised learning path planning techniques, interpolation curve techniques, genetic algorithms, meta-heuristic algorithms, and/or any of wide variety of other systems. Path planning system 240 illustratively automatically generates the swaths or passes 160-178 and the turns connecting the swaths or passes. Path planning system 240 can calculate the route for the cleanup lap 156 around the boundary of the mowed area. Path planning system 240 outputs path plan 280 which identifies the route of fairway mowing vehicle 100-1 and may also identify locations where the cutting heads 104, 106 are to be in the raised position and where cutting heads 104, 106 are to be in the lowered position.

It will be noted that the locations where the cutting heads 104, 106 are to be in the raised and lowered positions can also be identified after receiving path plan 280 in subsequent processing on mowing vehicle control system 105 or elsewhere. For instance, mowing vehicle control system 105 can use cutting head configuration and dimension data to determine when each of the individual cutting heads 104, 106 need to be in the raised position and lowered position based upon the location of the boundary of the fairway and the location of the obstacles relative to the route of mowing vehicle 100-1 defined by the path plan. Further, the locations where the cutting heads 104, 106 are to be in the raised and lowered positions can be generated or provided on a per-cutting head basis so that each of the individual cutting heads 104, 106 can be independently controlled (e.g., independently raised and/or lowered) independently relative to the other cutting heads 104, 106. In another example, the cutting heads 104, 106 can be controlled in subsets (e.g., the front cutting heads 104 can be raised and lowered together and the rear cutting heads 106 can be raised and lowered together, or the right side cutting heads can be raised together and the left side cutting heads can be raised together, or in other subsets), or all of the cutting heads 104, 106 can be raised and lowered as a group. These and other examples are contemplated herein.

Navigation system 246 can then automatically execute path plan 280. Navigation system 246 can include any of wide variety of different types of systems that control steering subsystem 114 and propulsion subsystem 112 to navigate grass mowing vehicle 100 along the route defined by path plan 280. Navigation system 246 can thus include decision-making algorithms that are used to decide when to change the speed and/or direction of grass mowing vehicle 100-1 based upon path plan 280, based on the location of obstacles, etc. It will also be noted that other mower control functionality 254 can be used to control any of a wide variety of functionality of mowing vehicle 100-1.

Speed-based implement control system 107 automatically and dynamically computes command initiation locations where raise commands and lower commands and other implement control commands are to be issued to ensure that the implement is controlled (e.g., cutting heads 104, 106 are raised or lowered) as desired. Thus, data store accessing system 280 accesses raise times 271, lower times 273, mowed area data 275, etc. Lookahead processor 282 automatically looks ahead along the route defined by the path plan 280 from a current location of mowing vehicle 100-1 (as output by geographic location sensor 256) to identify any implement command events (e.g., raise or lower events). In one example, lookahead processor 282 looks ahead along the route of mowing vehicle 100-1 by a lookahead distance. The lookahead distance may be a static distance or a dynamic distance that varies based upon the speed of grass mowing vehicle 100-1 or a distance that can be configured by operator interaction or in other ways.

Raise/lower event identifier 286 automatically determines whether there are any implement control events (such as a raise event or a lower event) ahead of mowing vehicle 100-1 (e.g., that will occur within a first distance or lookahead distance). For instance, again referring to FIG. 3, raise/lower event identifier 286 may determine that the lower event at location D (the location where the cutting heads is to be in the lowered position) is ahead of mowing vehicle 100-1 (e.g., is within the lookahead distance of the current position of mowing vehicle 100-1 or within the lookahead distance of location A).

If a raise or lower event is identified by raise/lower event identifier 286 ahead of mowing vehicle 100-1 (e.g., within the lookahead distance), then the speed-based control components 287 automatically begin to perform speed-based control of the implement (e.g., speed-based control of the raise and lower operations of the cutting heads 104, 106). Deck up/down distance processor 284 automatically identifies the distance that the raise/lower event is ahead of the current mower position, and dynamic actuation point identifier 288 automatically and dynamically identifies the command initiation point (e.g., actuation point B in FIG. 3) where the command signal will need to be issued to initiate the raise/lower operation. Dynamic actuation point identifier 288 thus obtains a current speed value from speed sensor 260 indicative of the current speed of mowing vehicle 100-1 and accesses the raise or lower time 271, 273 (depending on which event has been identified) and computes the command initiation location (e.g., the location of actuation point B in FIG. 3) where the lower control command is to be issued. By dynamically it is meant that dynamic actuation point identifier 288 continues to intermittently or continuously re-evaluate the location of the command initiation point (e.g., the location of actuation point B in FIG. 3) based on the current speed of grass mowing vehicle 100-1 until the location of grass mowing vehicle 100-1 is within a threshold distance of location B and the command is issued.

Threshold position identifier 290 compares the current location of grass mowing vehicle 100-1 to the currently calculated location of point B to determine whether grass mowing vehicle 100-1 is within a threshold distance of point B. If not, dynamic actuation point identifier 288 continues to update the location of point B based on a newly detected speed of mowing vehicle 100-1, and threshold position identifier 290 continues to compare that updated location to the location of the grass mowing vehicle 100-1 until the grass mowing vehicle 100-1 is within a threshold distance of the location of point B. At that time, actuation control signal generator 292 generates a control signal to the raise/lower actuators 232 to initiate the raise or lower event.

Raise/lower rate processor 291 can be used to perform continuing control, even while the cutting head 104 is being raised or lowered, where the rate at which the cutting head 104 is raised or lowered can be controlled (e.g., where that rate is programmable or configurable). After the control command is given to initiate the raise or lower event, raise/lower rate processor 291 continues to monitor the ground speed of mowing vehicle 100-1 to see whether the ground speed changes. If so, then raise/lower rate processor 291 can provide a control signal to raise/lower actuators 232 to change the rate at which cutting head 104 is being raised or lowered, to accommodate for the change in ground speed of mowing vehicle 100-1. For instance, if the group if mowing vehicle 100-1 has accelerated, then raise/lower rate processor 291 can control the raise/lower actuators 232 to increase the rate at which the cutting head 104 is being raised or lowered. If mowing vehicle 100-1 has decelerated, then raise/lower rate processor 291 can control the raise/lower actuators 232 to decrease the rate at which the cutting head 104 is being raised or lowered.

It will also be appreciated that there may be a plurality of different raise/lower events ahead of mowing vehicle 100-1 (e.g., within the lookahead window) at any given time. For instance, raise/lower event identifier 286 may automatically identify a raise event ahead of mowing vehicle 100-1 (e.g., in the lookahead window) and speed-based command components 287 begin processing that event. Then, shortly afterwards, raise/lower event identifier 286 may automatically identify a lower event ahead of mowing vehicle 100-1 (e.g., that enters the lookahead window), even before the raise event has occurred. In that case, each of the raise/lower events is processed, in turn, beginning with the raise/lower event that mowing vehicle 100-1 will reach first. Such raise/lower events can be processed sequentially, or in parallel, or in another way. For purpose of the present description, processing of a single raise/lower event within the lookahead window is described, but this is by way of example only. The same description could just as easily be applied to the processing of a plurality of raise/lower events that are within the lookahead window at the same time.

Again, it will be appreciated that where the individual cutting heads 104, 106 are to be raised and lowered or otherwise controlled independently of one another, or as subsets, then the speed-based implement control is performed with respect to each individual cutting head 104, 106, or with respect to each group. The present description proceeds with respect to the speed-based implement control being performed with respect to cutting head 104. This is only one example. The same processing could just as easily be applied to subsets of the cutting heads, where the cutting heads are to be controlled in subsets, or to all of the cutting heads as a group, where the cutting heads are to be controlled as a group.

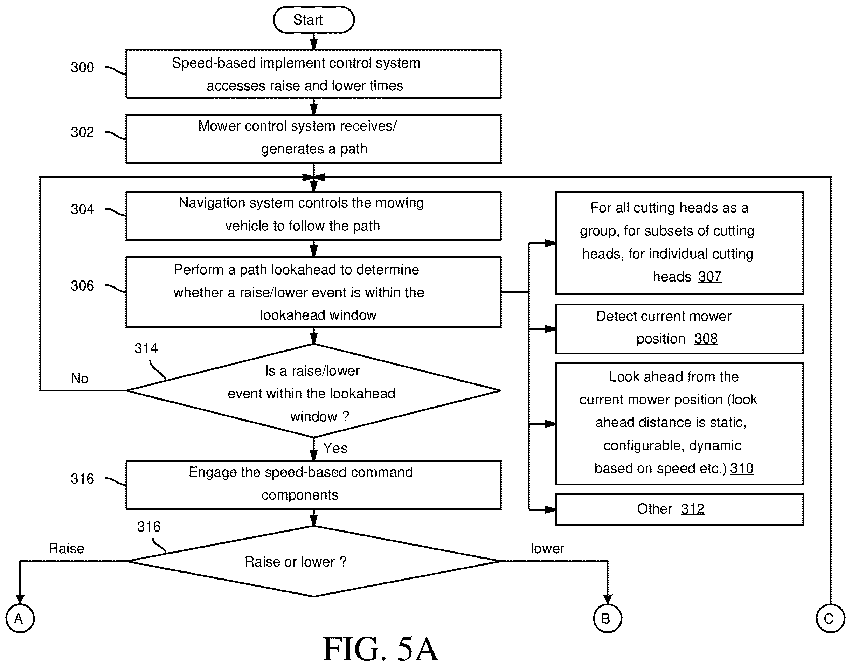

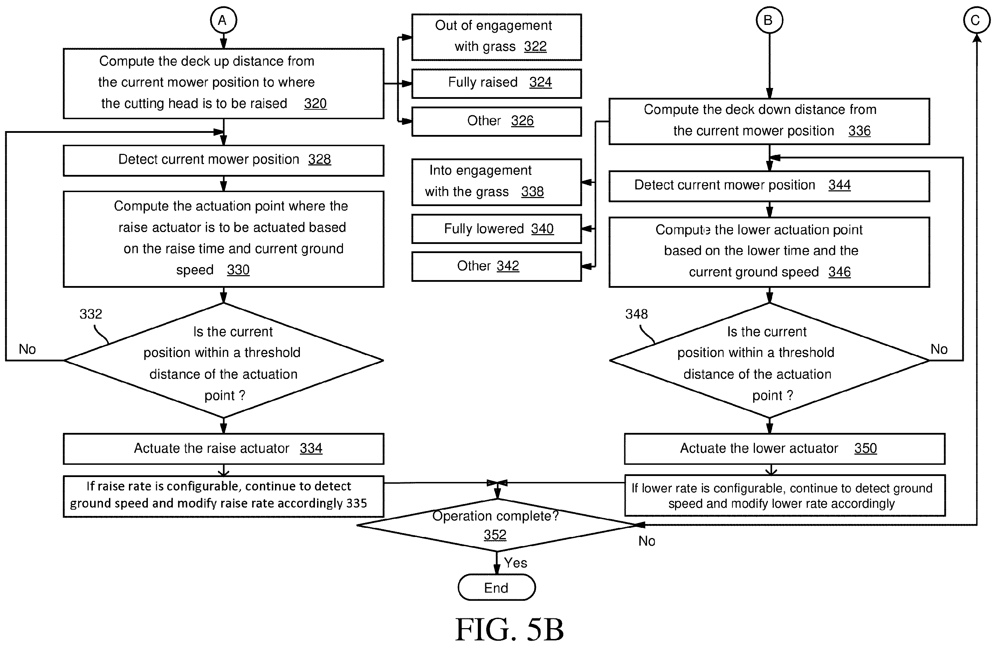

FIGs. 5A and 5B, collectively referred to herein as FIG. 5, show a flow diagram illustrating one example of the operation of speed-based implement control system 107 in identifying implement control events (e.g., raise events and lower events) and determining where to issue the control commands in order to carry out those events based upon the current speed of grass mowing vehicle 100-1. It is first assumed that data store accessing system 280 accesses the raise times 271 and lower times 273 from data store 244. Those times indicate the latency corresponding to a raise operation and a lower operation for cutting head 104. Again, in one example, the raise times 271 and/or lower times 273 are configurable or programmable where, for instance, the rate at which the cutting head 104 is raised and/or lowered is controllable. Accessing such information is indicated by block 300 in the flow diagram of FIG. 5.

Speed-based implement control system 107 also receives path plan 280 which identifies the route of mowing vehicle 100-1. Receiving the path plan is indicated by block 302 in the flow diagram of FIG. 5. Path plan 280 may identify the location of the raise and lower events along the route of mowing vehicle 100-1, or those locations may be added afterward in subsequent processing.

Navigation system 246 begins controlling the mowing vehicle 100-1 to follow the path defined by path plan 280, as indicated by block 304 and the flow diagram of FIG. 5. Lookahead processor 280 performs a path lookahead to determine whether an implement control event (e.g., a raise event or lower event) is to occur ahead of mowing vehicle 100-1 (e.g., within a lookahead window or within a lookahead distance). Performing a lookahead is indicated by block 306 in the flow diagram of FIG. 5.

Again, where the plurality of cutting heads 104, 106 are controlled as a group, then the lookahead operation is performed to look for a raise event or a lower event for the entire group of cutting heads 104, 106. Where the cutting heads 104, 106 are controllable in subsets, then the lookahead is performed to identify a raise event or lower event for any of the subsets of independently controllable cutting heads. Where each of the cutting heads 104, 106 are independently controllable relative to the other cutting heads 104, 106, then the lookahead is performed with respect to whether a raise event or a lower event for any of the different cutting heads 104, 106 is ahead of mowing vehicle 100-1 (e.g., within the lookahead window). Looking for raise/lower events for the cutting heads as a group, for subsets of the cutting heads, and for individually controllable cutting heads as indicated by block 307. It will be assumed for the sake of the present discussion that the lookahead is performed with respect to cutting head 104, but this is for the sake of example only.

In one example, lookahead processor 282 receives an indication of the current mower position of mowing vehicle 100-1 from geographic location sensor 256, as indicated by block 308 and the flow diagram of FIG. 5. Lookahead processor 282 then looks ahead along the route of mowing vehicle 100-1 from the current mower position. In one example, the lookahead is performed through a lookahead distance. The lookahead distance may be a static distance or configurable or a dynamic distance that changes based upon mower speed. Looking ahead along the mower route from the current mower position through the lookahead distance is indicated by block 310. The path lookahead can be performed in other ways as well, as indicated by block 312.

Raise/lower event identifier 286 then determines whether a raise or lower event is to occur ahead of mowing vehicle 100-1 (e.g., within the lookahead window) as indicated by block 314. For instance, raise/lower event identifier 286 determines whether, if cutting head 104 is currently in the raised position, it needs to be in the lowered position at a location which is within the lookahead window. Similarly, if cutting head 104 is in the lowered position, then raise/lower event identifier 286 determines whether cutting head 104 needs to be in the raised position at a location that is within the lookahead window.

If no raise or lower event is identified ahead of mowing vehicle 100-1 (e.g., within the lookahead window), as determined at block 314, then processing reverts to block 304 where the navigation system 246 continues to navigate mowing vehicle 100-1 along the route defined by path plan 280. However, if, at block 314, raise/lower event identifier 286 identifies a raise or lower event ahead of mowing vehicle 100-1 (e.g., within the lookahead window), then raise/lower event identifier 286 generates an output signal that engages the operation of the speed-based command components 287, including deck up/down distance processor 284, dynamic actuation point identifier 288, threshold position identifier 290, and actuation control signal generator 292. Engaging these speed-based command components 287 is indicated by block 316 in the flow diagram of FIG. 5.

If the event is a raise event, as determined at block 318, then deck up/down distance processor 284 computes the distance from the current mower position to the point where the cutting head 104 is to be in the raised position (e.g., referring to FIG. 3, the distance between point E and point H). This is referred to as the deck up distance and computing the deck up distance is indicated by block 320 in the flow diagram of FIG. 5. It will be noted that it may be operator preference (or otherwise desirable) to compute the deck up distance as the distance between point E, where the cutting head 104 is fully lowered and point H where the cutting head is to be fully raised. However, due to operator preference, or for another reason, the deck up distance may be computed as the distance between point E and point G, where the cutting head 104 comes out of engagement with the grass. In such an example, the grass height is estimated or measured to determine how high cutting head 104 needs to be raised to be out of engagement with the grass. Computing the deck up distance as the distance between points E and G is indicated by block 322 in the flow diagram of her FIG. 5. Computing the deck up distance is the distance between points E and H is indicated by block 324 in the flow diagram of FIG. 5. The deck up distance may be computed in other ways for other reasons as well, as indicated by block 326.

Dynamic actuation point identifier 288 then obtains a value indicative of the current ground speed of mowing vehicle 100-1, as indicated by block 328. The ground speed can be received from speed sensor 260 or in other ways. Dynamic actuation point identifier 288 then computes the actuation point (or command initiation location) where the raise command is to be issued to actuate the raise actuator 232 based upon the raise time and the current ground speed, as indicated by block 330. For instance, with reference to FIG. 3, dynamic actuation point identifier 288 calculates that, given the current ground speed of mowing vehicle 100-1, the raise actuator 232 should be actuated at point F (e.g., the raise control command should be issued at point F) so that mowing head 104 can be fully raised by the time it reaches the deck up position (e.g., point G or point H as desired).

Once the actuation point has been calculated, threshold position identifier 290 determines whether the current mowing vehicle location E is within the threshold distance of the actuation point F along the route of the mowing vehicle 100-1. If so, actuation control signal generator 292 issues the raise command by generating the raise control signal to actuate the raise actuator 232 to begin raising cutting head 104. Determining that the current mower position is within the threshold distance of the actuation point is indicated by block 332 in FIG. 5 and issuing the raise command to actuate the raise actuator 232 is indicated by block 334.

Then, if the raise rate is programmable or configurable, raise/lower rate processor 291 continues to monitor the ground speed of mowing vehicle 100-1 and modify the raise rate accordingly, as indicated by block 335. For example, if raise/lower rate processor 291 detects that the speed of mowing vehicle 100-1 has increased after the raise actuator is actuated, then raise/lower rate processor 291 can generate a control signal to increase the rate at which cutting head 104 is raised. Where raise/lower rate processor 291 determines that the speed of mowing vehicle 100-1 has decreased after the raise actuator is actuated, then raise/lower rate processor 291 can generate a control signal to decrease the rate at which cutting head 104 is raised.

If, however, at block 332, threshold position identifier 290 determines that the current mower position E is not within a threshold distance of the actuation point F, then processing reverts to block 328 where dynamic actuation point identifier 288 obtains a value indicative of the current ground speed of mowing vehicle 100-1 and recalculates the position of the actuation point F. If the mowing vehicle 100-1 has accelerated since the last time point F was calculated, this means that mowing vehicle 100-1 will cover more distance during the raise time 271 than it would have the last time the location of point F was calculated. Therefore, the new location for point F may be further back from the deck up position H along the route of mowing vehicle 100-1. This will add distance between the new location of the actuation point F and the deck up location H to ensure that cutting head 104 can reach the raised position by the time the mowing vehicle 100-1 reaches location H. However, if the mowing vehicle 100-1 has decelerated since the last time the location of point F was calculated, then the new location for point F may be closer to point H along the route of mowing vehicle 100-1 because the mowing vehicle 100-1 will not cover as much distance during the raise time 271.

Therefore, until the location of mowing vehicle 100-1 is within a threshold distance of the current location of the actuation point F, dynamic actuation point identifier 288 continues to monitor the speed of mowing vehicle 100-1 and recalculate the location of point F. This will accommodate any accelerations and decelerations that mowing vehicle 100-1 may undergo as it approaches the actuation point F.

Returning again to block 318 in FIG 5, if raise/lower event identifier 286 identifies an upcoming control event as a lower event, then deck up/down distance processor 284 calculates the current distance between the current location of mowing vehicle 100-1 and the position where the cutting head 104 is to be lowered, as indicated by block 336 and the flow diagram of FIG. 5. Again, referring to FIG. 3, if the current mower position is at point A, then deck up/down distance processor 284 calculates the distance between point A and point D. As discussed above with respect to the raise event, it may that be because of operator preference, or for some other reason, the deck down position is to be identified as point D where cutting head 104 is fully lowered or point C where cutting head 104 is lowered sufficiently that it begins to engage the grass. In the latter scenario, the grass height may be sensed or estimated to know where, during the lower cycle, the cutting head 104 will engage the grass. Calculating the deck down distance as the distance between the current mower position A and position C where cutting head 104 engages the grass as indicated by block 338 in the flow diagram of FIG. 5. Calculating the deck down distance as the distance between the current location A of mowing vehicle 100-1 and the location of point D were cutting at 104 is in the fully lowered position is indicated by block 340. The deck down distance can be calculated in other ways as well, as indicated by block 342.

Dynamic actuation point identifier 288 then detects the current mower ground speed, as indicated by block 344, and computes the actuation point where lower command is to be issued and the lower actuator 232 is to be actuated based upon the lower time 273 and of the current ground speed of mowing vehicle 100-1, as indicated by block 346. Thus, referring again to FIG. 3, dynamic actuation point identifier 288 calculates the location of point B where the lower command is to be issued to actuate the lower actuator 232.

Threshold position identifier 290 then determines whether the current mower position A is within a threshold distance of the actuation point B. Determining whether the mowing vehicle 100-1 is within the threshold distance of the actuation point is indicated by block 348 in the flow diagram of FIG. 5. If so, then actuation control signal generator 290 issues the lower command by generating a control signal to actuate the lower actuator 232 to lower the cutting head 104 as indicated by block 350.

Then, if the lower rate is programmable or configurable, raise/lower rate processor 291 continues to monitor the ground speed of mowing vehicle 100-1 and modify the lower rate accordingly, as indicated by block 335. For example, if raise/lower rate processor 291 detects that the speed of mowing vehicle 100-1 has increased after the lower actuator is actuated, then raise/lower rate processor 291 can generate a control signal to increase the rate at which cutting head 104 is lowered. Where raise/lower rate processor 291 determines that the speed of mowing vehicle 100-1 has decreased after the lower actuator is actuated, then raise/lower rate processor 291 can generate a control signal to decrease the rate at which cutting head 104 is lowered.

However, if, at block 348, threshold position identifier 290 determines that the current mower position A is not within a threshold distance of the location of the actuation point B, then processing reverts to block 344 where dynamic actuation point identifier 288 again calculates the location of the actuation point B given the current speed of mowing vehicle 100-1. Thus, until the current mower position A is within a threshold distance of the currently calculated location of the actuation point B, dynamic actuation point identifier 288 continues to revise and update the location of the actuation point B based on any changes in the mower speed. This accommodates for accelerations and decelerations as the mowing vehicle 100-1 approaches the actuation point B. Until the mowing operation is complete, as determined at block 352, processing reverts to block 304 where the navigation system 246 continues to control the mowing vehicle 100-1 to follow the path defined by path plan 280.

It can thus be seen that the present description describes a system that dynamically adjusts the actuation points corresponding to implement control operations, based upon the speed of mowing vehicle 100-1, until the commands for performing those control operations are issued. Even after the commands are issued, the present system can dynamically adjust the rate at which the cutting heads are raised or lowered based on changes in speed of mowing vehicle 100-1, where the raise rates and lower rates are controllable. This accommodates for changes in mower speed as the mowing vehicle 100-1 approaches the actuation points, and, in some examples, even after the mowing vehicle 100-1 has reached actuation point and the commands have been issued. This greatly enhances the accuracy of the control system and reduces the likelihood of damaging the area being mowed.

The present discussion has mentioned processors and servers. In one example, the processors and servers include computer processors with associated memory and timing circuitry, not separately shown. The processors or servers are functional parts of the systems or devices to which they belong and are activated by and facilitate the functionality of the other components or items in those systems.

Also, a number of user interface (UI) displays have been discussed. The UI displays can take a wide variety of different forms and can have a wide variety of different user actuatable input mechanisms disposed thereon. For instance, the user actuatable input mechanisms can be text boxes, check boxes, icons, links, drop-down menus, search boxes, etc. The mechanisms can also be actuated in a wide variety of different ways. For instance, the mechanisms can be actuated using a point and click device (such as a track ball or mouse). The mechanisms can be actuated using hardware buttons, switches, a joystick or keyboard, thumb switches or thumb pads, etc. The mechanisms can also be actuated using a virtual keyboard or other virtual actuators. In addition, where the screen on which the mechanisms are displayed is a touch sensitive screen, the mechanisms can be actuated using touch gestures. Also, where the device that displays the mechanisms has speech recognition components, the mechanisms can be actuated using speech commands.

A number of data stores have also been discussed. It will be noted the data stores can each be broken into multiple data stores. All can be local to the systems accessing the data stores, all can be remote, or some can be local while others are remote. All of these configurations are contemplated herein.

Also, the figures show a number of blocks with functionality ascribed to each block. It will be noted that fewer blocks can be used so the functionality is performed by fewer components. Also, more blocks can be used with the functionality distributed among more components.

It will be noted that the above discussion has described a variety of different systems, components, generators, identifiers, sensors, and/or logic. It will be appreciated that such systems, components, generators, identifiers, sensors, and/or logic can be comprised of hardware items (such as processors and associated memory, or other processing components, some of which are described below) that perform the functions associated with those systems, components, generators, identifiers, sensors, and/or logic. In addition, the systems, components, generators, identifiers, sensors, and/or logic can be comprised of software that is loaded into a memory and is subsequently executed by a processor or server, or another computing component, as described below. The systems, components, generators, identifiers, sensors, and/or logic can also be comprised of different combinations of hardware, software, firmware, etc., some examples of which are described below. These are only some examples of different structures that can be used to form the systems, components, generators, identifiers, sensors, and/or logic described above. Other structures can be used as well.

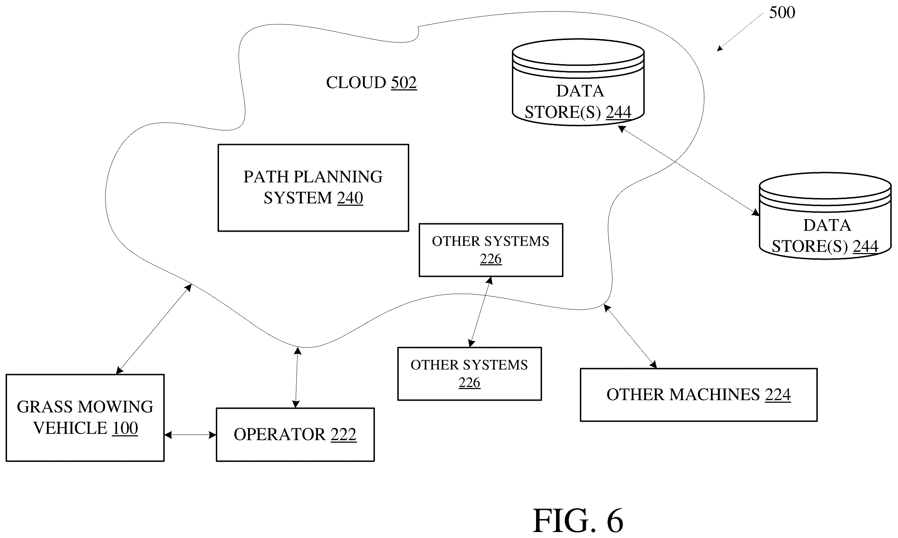

FIG. 6 is a block diagram of mowing vehicle 100-1, shown in FIG. 1, except that it communicates with elements in a remote server architecture 500. In an example, remote server architecture 500 can provide computation, software, data access, and storage services that do not require end-user knowledge of the physical location or configuration of the system that delivers the services. In various examples, remote servers can deliver the services over a wide area network, such as the internet, using appropriate protocols. For instance, remote servers can deliver applications over a wide area network, and they can be accessed through a web browser or any other computing component. Software or components shown in previous FIGS. as well as the corresponding data, can be stored on servers at a remote location. The computing resources in a remote server environment can be consolidated at a remote data center location or they can be dispersed. Remote server infrastructures can deliver services through shared data centers, even though they appear as a single point of access for the user. Thus, the components and functions described herein can be provided from a remote server at a remote location using a remote server architecture. Alternatively, the components and functions can be provided from a conventional server, or they can be installed on client devices directly, or in other ways.

In the example shown in FIG. 6, some items are similar to those shown in previous FIGS. and they are similarly numbered. FIG. 6 specifically shows that path planning system 240, other systems 226, data store 244 and/or other items can be located at a remote server location 502. Therefore, mowing vehicle 100-1 accesses those systems through remote server location 502.

FIG. 6 also depicts another example of a remote server architecture. FIG. 6 shows that it is also contemplated that some elements of previous FIGS are disposed at remote server location 502 while others are not. By way of example, data store 244 and/or other systems 226 or other items can be disposed at a location separate from location 502 and accessed through the remote server at location 502. Regardless of where the items are located, they can be accessed directly by mowing vehicle 100-1, through a network (either a wide area network or a local area network), the items can be hosted at a remote site by a service, or the items can be provided as a service, or accessed by a connection service that resides in a remote location. Also, the data can be stored in substantially any location and intermittently accessed by, or forwarded to, interested parties. All of these architectures are contemplated herein.

It will also be noted that the elements of previous FIGS., or portions of them, can be disposed on a wide variety of different devices. Some of those devices include servers, desktop computers, laptop computers, tablet computers, or other mobile devices, such as palm top computers, cell phones, smart phones, multimedia players, personal digital assistants, etc.

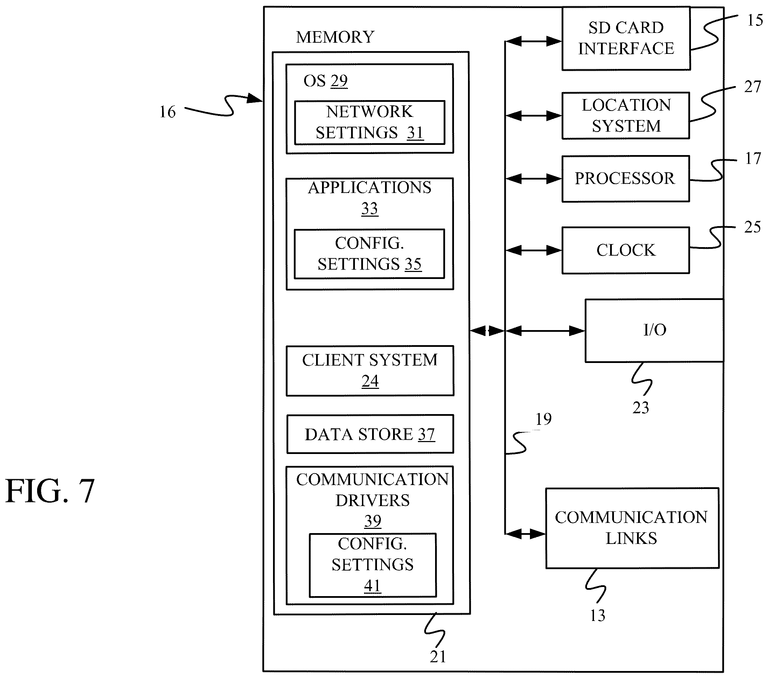

FIG. 7 is a simplified block diagram of one illustrative example of a handheld or mobile computing device that can be used as a user's or client's handheld device 16, in which the present system (or parts of it) can be deployed. For instance, a mobile device can be deployed in the operator compartment of mowing vehicle 100-1, or carried by an operator 222, for use in generating, processing, or displaying the implement command data. FIGS. 7-9 are examples of handheld or mobile devices.

FIG. 7 provides a general block diagram of the components of a client device 16 that can run some components shown in previous FIGS., that interacts with them, or both. In the device 16, a communications link 13 is provided that allows the handheld device to communicate with other computing devices and under some examples provides a channel for receiving information automatically, such as by scanning. Examples of communications link 13 include allowing communication though one or more communication protocols, such as wireless services used to provide cellular access to a network, as well as protocols that provide local wireless connections to networks.

In other examples, applications can be received on a removable Secure Digital (SD) card that is connected to an interface 15. Interface 15 and communication links 13 communicate with a processor 17 (which can also embody processors or servers from previous FIGS.) along a bus 19 that is also connected to memory 21 and input/output (I/O) components 23, as well as clock 25 and location system 27.

I/O components 23, in one example, are provided to facilitate input and output operations. I/O components 23 for various examples of the device 16 can include input components such as buttons, touch sensors, optical sensors, microphones, touch screens, proximity sensors, accelerometers, orientation sensors and output components such as a display device, a speaker, and or a printer port. Other I/O components 23 can be used as well.

Clock 25 illustratively comprises a real time clock component that outputs a time and date. It can also, illustratively, provide timing functions for processor 17.

Location system 27 illustratively includes a component that outputs a current geographical location of device 16. This can include, for instance, a global positioning system (GPS) receiver, a dead reckoning system, a cellular triangulation system, or other positioning system. Location system 27 can also include, for example, mapping software or navigation software that generates desired maps, navigation routes and other geographic functions.

Memory 21 stores operating system 29, network settings 31, applications 33, application configuration settings 35, data store 37, communication drivers 39, and communication configuration settings 41. Memory 21 can include all types of tangible volatile and non-volatile computer-readable memory devices. Memory 21 can also include computer storage media (described below). Memory 21 stores computer readable instructions that, when executed by processor 17, cause the processor to perform computer-implemented steps or functions according to the instructions. Processor 17 can be activated by other components to facilitate their functionality as well.

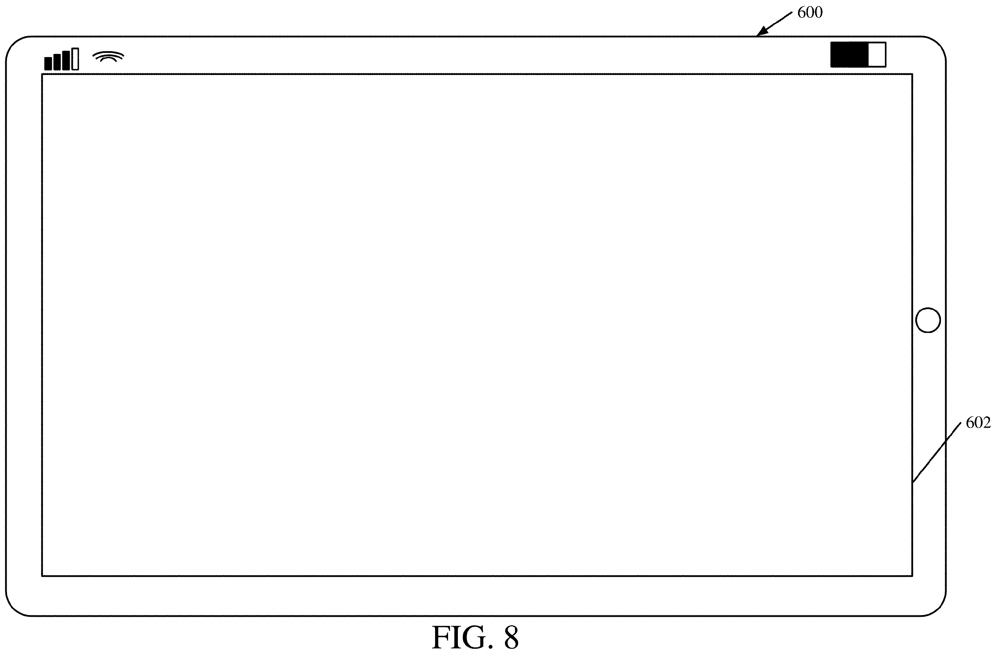

FIG. 8 shows one example in which device 16 is a tablet computer 600. In FIG. 8, computer 600 is shown with user interface display screen 602. Screen 602 can be a touch screen or a pen-enabled interface that receives inputs from a pen or stylus. Computer 600 can also use an on-screen virtual keyboard. Of course, computer 600 might also be attached to a keyboard or other user input device through a suitable attachment mechanism, such as a wireless link or USB port, for instance. Computer 600 can also illustratively receive voice inputs as well.

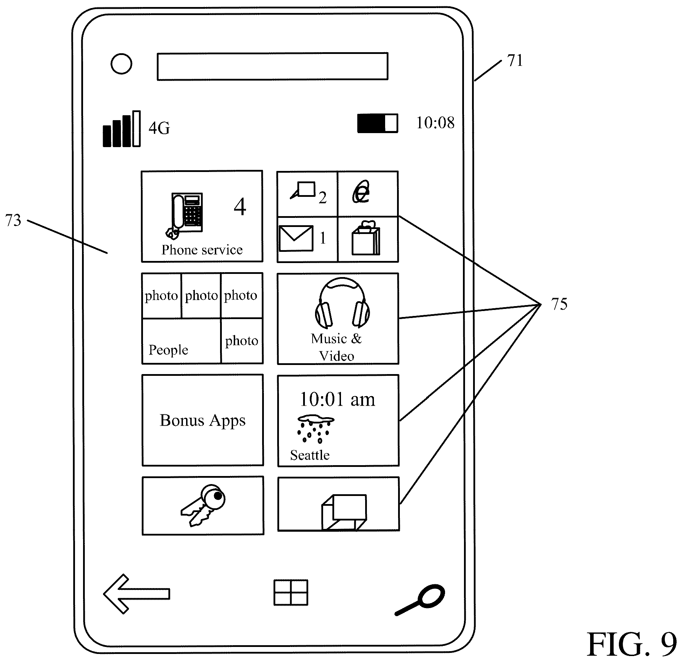

FIG. 9 shows that the device can be a smart phone 71. Smart phone 71 has a touch sensitive display 73 that displays icons or tiles or other user input mechanisms 75. Mechanisms 75 can be used by a user to run applications, make calls, perform data transfer operations, etc. In general, smart phone 71 is built on a mobile operating system and offers more advanced computing capability and connectivity than a feature phone.

Note that other forms of the devices 16 are possible.

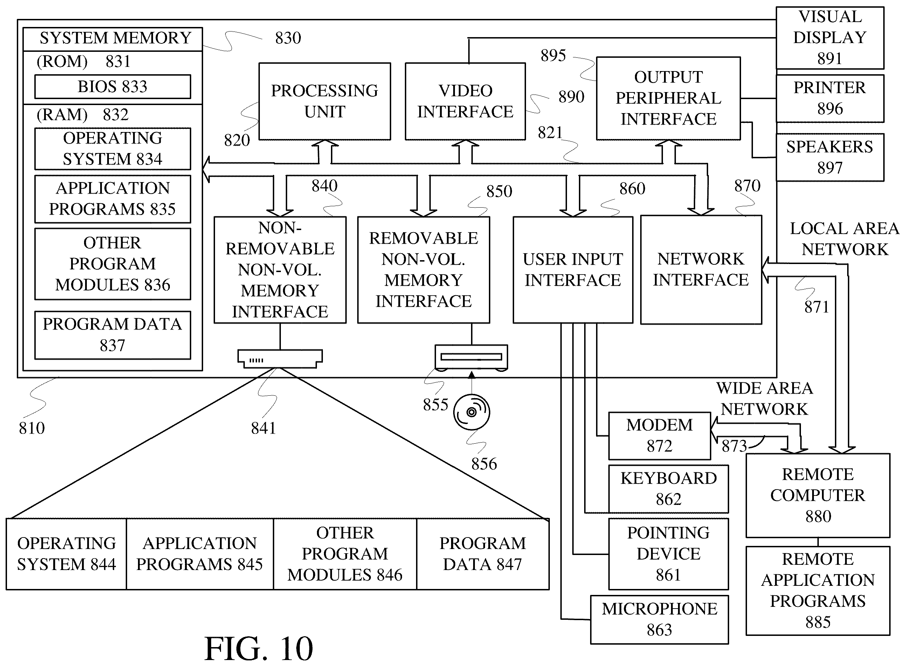

FIG. 10 is one example of a computing environment in which elements of previous FIGS., or parts of it, (for example) can be deployed. With reference to FIG. 10, an example system for implementing some embodiments includes a computing device in the form of a computer 810 programmed to operate as described above. Components of computer 810 may include, but are not limited to, a processing unit 820 (which can comprise processors or servers from previous FIGS.), a system memory 830, and a system bus 821 that couples various system components including the system memory to the processing unit 820. The system bus 821 may be any of several types of bus structures including a memory bus or memory controller, a peripheral bus, and a local bus using any of a variety of bus architectures. Memory and programs described with respect to previous FIGS. can be deployed in corresponding portions of FIG. 10.

Computer 810 typically includes a variety of computer readable media. Computer readable media can be any available media that can be accessed by computer 810 and includes both volatile and nonvolatile media, removable and non-removable media. By way of example, and not limitation, computer readable media may comprise computer storage media and communication media. Computer storage media is different from and does not include a modulated data signal or carrier wave. Computer storage media includes hardware storage media including both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computer 810. Communication media may embody computer readable instructions, data structures, program modules or other data in a transport mechanism and includes any information delivery media. The term "modulated data signal" means a signal that has one or more of its characteristics set or changed in such a manner as to encode information in the signal. System memory 830 includes computer storage media in the form of volatile and/or nonvolatile memory such as read only memory (ROM) 831 and random-access memory (RAM) 832. A basic input/output system 833 (BIOS), containing the basic routines that help to transfer information between elements within computer 810, such as during start-up, is typically stored in ROM 831. RAM 832 typically contains data and/or program modules that are immediately accessible to and/or presently being operated on by processing unit 820. By way of example, and not limitation, FIG. 10 illustrates operating system 834, application programs 835, other program modules 836, and program data 837.

The computer 810 may also include other removable/non-removable volatile/nonvolatile computer storage media. By way of example only, FIG. 10 illustrates a hard disk drive 841 that reads from or writes to non-removable, nonvolatile magnetic media, an optical disk drive 855, and nonvolatile optical disk 856. The hard disk drive 841 is typically connected to the system bus 821 through a non-removable memory interface such as interface 840, and optical disk drive 855 are typically connected to the system bus 821 by a removable memory interface, such as interface 850.

Alternatively, or in addition, the functionality described herein can be performed, at least in part, by one or more hardware logic components. For example, and without limitation, illustrative types of hardware logic components that can be used include Field-programmable Gate Arrays (FPGAs), Application-specific Integrated Circuits (e.g., ASICs), Application-specific Standard Products (e.g., ASSPs), System-on-a-chip systems (SOCs), Complex Programmable Logic Devices (CPLDs), etc.

The drives and their associated computer storage media discussed above and illustrated in FIG. 10, provide storage of computer readable instructions, data structures, program modules and other data for the computer 810. In FIG. 10, for example, hard disk drive 841 is illustrated as storing operating system 844, application programs 845, other program modules 846, and program data 847. Note that these components can either be the same as or different from operating system 834, application programs 835, other program modules 836, and program data 837.

A user may enter commands and information into the computer 810 through input devices such as a keyboard 862, a microphone 863, and a pointing device 861, such as a mouse, trackball or touch pad. Other input devices (not shown) may include a joystick, game pad, satellite dish, scanner, or the like. These and other input devices are often connected to the processing unit 820 through a user input interface 860 that is coupled to the system bus but may be connected by other interface and bus structures. A visual display 891 or other type of display device is also connected to the system bus 821 via an interface, such as a video interface 890. In addition to the monitor, computers may also include other peripheral output devices such as speakers 897 and printer 896, which may be connected through an output peripheral interface 895.

The computer 810 is operated in a networked environment using logical connections (such as a controller area network - CAN, local area network - LAN, or wide area network WAN) to one or more remote computers, such as a remote computer 880.

When used in a LAN networking environment, the computer 810 is connected to the LAN 871 through a network interface or adapter 870. When used in a WAN networking environment, the computer 810 typically includes a modem 872 or other means for establishing communications over the WAN 873, such as the Internet. In a networked environment, program modules may be stored in a remote memory storage device. FIG. 10 illustrates, for example, that remote application programs 885 can reside on remote computer 880.

It should also be noted that the different examples described herein can be combined in different ways. That is, parts of one or more examples can be combined with parts of one or more other examples. All of this is contemplated herein.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A mowing vehicle (100), comprising:
a propulsion subsystem (112);
a steering subsystem (114);
a cutting head (104, 106); and
a mowing vehicle control system (105) configured to dynamically identify (288) an actuation point for issuing a cutting head position command, to change (320, 336) a position of the cutting head (104, 106) from a first position to a second position, based on a current ground speed (328) of the mowing vehicle (100) and based on a location where the cutting head (104, 106) is to be in the second position.

2. The mowing vehicle (100) of claim 1, wherein the mowing vehicle control system (105) comprises:
an event identifier (286) configured to identify an implement control event indicating that the cutting head (104, 106) is to be in the second position ahead of the mowing vehicle (100) along a route of the mowing vehicle (100);
a dynamic actuation point identifier (288) configured to access an event latency value corresponding to moving the cutting head (104, 106) from the first position to the second position, to receive a speed indicator indicative of a speed of the mowing vehicle (100), and automatically compute, based on the speed indicator and the event latency value, a location of the actuation point along the route of the mowing vehicle (100) at which to issue the cutting head position command to change the position of the cutting head (104, 106) from the first position to the second position; and
a threshold position identifier (290) configured to automatically compute whether to issue the cutting head position command based on the location of the actuation point, the dynamic actuation point identifier (288) and the threshold position identifier (290) being configured to automatically repeat detecting the speed of the mowing vehicle (100), automatically computing the location of the actuation point, and automatically computing whether to issue the cutting head position command, until the event control command is issued.

3. The mowing vehicle (100) of claim 2, wherein the threshold position identifier (290) is configured to detect a position of the mowing vehicle (100) along the route of the mowing vehicle (100), and compute whether the position of the mowing vehicle (100) is within a threshold distance of the actuation point, the mowing vehicle control system (105) further comprising:
an actuation control signal generator configured to issue the cutting head position command responsive to the threshold position identifier (290) determining that the position of the mowing vehicle (100) is within the threshold distance of the actuation point.

4. The mowing vehicle (100) of one of the claims 1 to 3, wherein the mowing vehicle control system (105) further comprises:
a lookahead processor (280) configured to receive a path plan for the mowing vehicle (100), the path plan defining the route of the mowing vehicle (100) and including a location of the implement control event along the route of the mowing vehicle (100) and to search ahead of the mowing vehicle (100), in a direction of travel of the mowing vehicle (100), along the route of the mowing vehicle (100) to determine whether the location of the implement control event is within a first distance.

5. The mowing vehicle (100) of one of the claims 1 to 4, further comprising:
a raise/lower actuator assembly (232) controllable to raise and lower the cutting head (104, 106), wherein the event identifier (286) is configured to identify the implement control event by, if the cutting head (104, 106) is in a lowered position, identifying whether a raise event, in which the cutting head (104, 106) is to be raised to a raised position, is within the first distance and, if the cutting head (104, 106) is in a raised position, identifying whether a lower event, in which the cutting head (104, 106) is to be lowered to a lowered position, is within the first distance.

6. A computer implemented method of controlling a mowing vehicle (100), comprising the mowing vehicle (100) of one of the claims 1 to 5, the method further comprising:
identifying (306) an implement control event ahead of the mowing vehicle (100) along a route of the mowing vehicle (100);
accessing (280) an event latency value corresponding to the implement control event, the event latency value being indicative of a latency between when an event control command is issued to execute the implement control event and when the implement control event is completed;
detecting (312) a speed of the mowing vehicle (100);
automatically computing (330, 346), based on the detected speed of the mowing vehicle (100) and an event latency value, a location of an actuation point along the route of the mowing vehicle (100) at which to issue an event control command to execute the implement control event;
automatically computing (332, 348) whether to issue the event control command based on the location of the actuation point; and
automatically repeating (352) the steps of detecting the speed of the mowing vehicle (100), automatically computing the location of the actuation point, and automatically computing whether to issue the event control command until the event control command is issued.

7. The computer implemented method of claim 6, wherein automatically computing whether to issue the event control command comprises:
detecting a position of the mowing vehicle (100) along the route of the mowing vehicle (100);
determining whether the position of the mowing vehicle (100) is within a threshold distance of the actuation point; and
if so, issuing the event control command.

8. The computer implemented method of claim 7, wherein automatically computing whether to issue the event control command comprises:
if the position of the mowing vehicle (100) is not within the threshold distance of the actuation point, then automatically repeating the steps of detecting the speed of the mowing vehicle (100), automatically computing the location of the actuation point, and automatically computing whether to issue the event control command until the event control command is issued.

9. The computer implemented method of one of the claims 6 to 8, wherein identifying an implement control event comprises:
receiving a path plan for the mowing vehicle (100), the path plan defining the route of the mowing vehicle (100) and including a location of the implement control event along the route of the mowing vehicle (100); and
searching ahead of the mowing vehicle (100), in a direction of travel of the mowing vehicle (100), along the route of the mowing vehicle (100) identify the location of the implement control event.

10. The computer implemented method of one of the claims 6 to 9, wherein identifying an implement control event comprises:
if the cutting head (104, 106) is in a lowered position, identifying whether a raise event, in which the cutting head (104, 106) is to be raised to a raised position, is within a dynamic lookahead window; and
if the cutting head (104, 106) is in a raised position, identifying whether a lower event, in which the cutting head (104, 106) is to be lowered to a lowered position, is within the dynamic lookahead window.

11. The computer implemented method of one of the claims 6 to 10, wherein the mowing vehicle (100) comprises a plurality of cutting heads (104, 106) controlled as a group and wherein identifying an implement control event comprises:
if the plurality of cutting heads (104, 106) is in a lowered position, identifying whether a raise event, in which the plurality of cutting heads (104, 106) is to be raised to a raised position, is ahead of the mowing vehicle (100) along the route of the mowing vehicle (100); and
if the plurality of cutting heads (104, 106) is in a raised position, identifying whether a lower event, in which the plurality of cutting heads (104, 106) is to be lowered to a lowered position, is ahead of the mowing vehicle (100) along the route of the mowing vehicle (100).

12. The computer implemented method of one of the claims 6 to **11,** wherein the mowing vehicle (100) comprises a plurality of different sets of cutting heads (104, 106), each different set of cutting heads (104, 106) being independently controllable relative to other sets of cutting heads (104, 106) in the plurality of different sets of cutting heads (104, 106), and wherein identifying an implement control event comprises:
for each set of cutting heads (104, 106) in the plurality of sets of cutting heads (104, 106):
if the set of cutting heads (104, 106) is in a lowered position, identifying whether a raise event, in which the set of cutting heads (104, 106) is to be raised to a raised position, is ahead of the mowing vehicle (100) along the route of the mowing vehicle (100); and
if the set of cutting heads (104, 106) is in a raised position, identifying whether a lower event, in which the set of cutting heads (104, 106) is to be lowered to a lowered position, is ahead of the mowing vehicle (100) along the route of the mowing vehicle (100).

13. The computer implemented method of one of the claims 6 to 12, wherein the mowing vehicle (100) comprises a plurality of different cutting heads (104, 106), each cutting head (104, 106) in the plurality of different cutting heads (104, 106) being independently controllable relative to other cutting heads (104, 106) in the plurality of different cutting heads (104, 106), and wherein identifying an implement control event comprises:
for each cutting head (104, 106) in the plurality of different cutting heads (104, 106):
if the cutting head (104, 106) is in a lowered position, identifying whether a raise event, in which the cutting head (104, 106) is to be raised to a raised position, is ahead of the mowing vehicle (100) along the route of the mowing vehicle (100); and
if the cutting head (104, 106) is in a raised position, identifying whether a lower event, in which the cutting head (104, 106) is to be lowered to a lowered position, is ahead of the mowing vehicle (100) along the route of the mowing vehicle (100).

14. The computer implemented method of one of the claims 6 to 13, wherein identifying an implement control event ahead of the mowing vehicle (100) along a route of the mowing vehicle (100) comprises:
receiving a path plan for the mowing vehicle (100), the path plan defining the route of the mowing vehicle (100) and including a location of the implement control event along the route of the mowing vehicle (100);
dynamically identifying a lookahead distance based on a speed of the mowing vehicle (100); and
searching the lookahead distance ahead of the mowing vehicle (100) along the route of the mowing vehicle (100), in a direction of travel of the mowing vehicle (100), to determine whether the location of the implement control event is within the lookahead distance.

15. The computer implemented method of one of the claims 7 to 14, and, after issuing the event control command, further comprising:
detecting the speed of the mowing vehicle (100);
automatically adjusting a rate at which the implement control event is executed based on the detected speed of the mowing vehicle (100) and a location of the implement control event; and automatically repeating the steps of detecting the speed of the mowing vehicle (100) and automatically adjusting a rate at which the implement control event is executed until the event control command is completed.
